# EUROPÄISCHE PATENTSCHRIFT

(11) **EP 3 375 328 B1**
(45) Veröffentlichungstag und Bekanntmachung des Hinweises auf die Patenterteilung: **09.10.2019**
(21) Anmeldenummer: 17161619.6
(22) Anmeldetag: 17.03.2017
(51) Int. Cl.: A47B 49/00, F16B 7/04, F16B 12/32, A47B 57/54

(54) **KLEMMVORRICHTUNG ZUM FESTLEGEN IN VERSCHIEDENEN LÄNGSPOSITIONEN AN EINEM GESTRECKT AUSGEBILDETEN TRÄGER**
CLAMPING DEVICE FOR FIXING IN DIFFERENT LONGITUDINAL POSITIONS ON A STRETCHED SUPPORT
DISPOSITIF DE SERRAGE DESTINÉ À FIXER DANS DIFFÉRENTES POSITIONS LONGITUDINALES SUR UN SUPPORT ÉTIRÉ

(43) Veröffentlichungstag der Anmeldung: 19.09.2018
(73) Patentinhaber: Vauth-Sagel Holding GmbH & Co. KG, 33034 Brakel (DE)
(72) Erfinder: Sagel, Claus, 33604 Bielefeld (DE); Sagel, Thomas, 33024 Brakel (DE)
(74) Vertreter: REHBERG HÜPPE + PARTNER

(56) Entgegenhaltungen:
- EP-B1- 2 353 440
- US-A- 5 272 952

## Beschreibung

### TECHNISCHES GEBIET DER ERFINDUNG

Die Erfindung bezieht sich auf eine Klemmvorrichtung zum Festlegen in verschiedenen Längspositionen an einem gestreckt ausgebildeten Träger sowie auf eine Anordnung einer Klemmvorrichtung auf einem solchen Träger. Die Klemmvorrichtung weist einen Lagersockel, der eine in Richtung einer Hauptachse durchlaufende Ausnehmung zur Aufnahme des Trägers aufweist und der die Ausnehmung in Umfangsrichtung um ihre Hauptachse über mindestens 200° umfasst, zwei an dem Lagersockel abgestützte Klemmelemente und eine Spannschraubenanordnung auf, die die Klemmelemente parallel zu der Hauptachse mit einer Primärkraft gegeneinander beaufschlagt, wobei die Querkraft in quer zu der Hauptachse verlaufende Sekundärkräfte umgelenkt wird, mit denen die Klemmelemente in die Ausnehmung hinein beaufschlagt werden.

Beispielsweise kann eine solche Klemmvorrichtung verwendet werden, um ein beweglich an dem Lagersockel gelagertes Tablar in einstellbarer Höhe an einem vertikal ausgerichteten Träger abzustützen, der auch als Tragsäule bezeichnet wird. Diese Verwendung kann zum Beispiel bei einem Beschlag für einen Kücheneckschrank erfolgen.

### STAND DER TECHNIK

Aus der EP 2 353 440 B1 ist ein Beschlag für einen Kücheneckschrank bekannt, der mittels einer Befestigungsvorrichtung an einer Tragsäule befestigbar ist. Die Befestigungsvorrichtung weist ein Klemmstück mit Klemmmitteln auf, die zwischen einem das Klemmstück an der Tragsäule in gewünschter Höhenlage relativ zu der Tragsäule unverschieblich fest klemmenden Klemmstellung und einer eine stufenlose Höhenverstellung der Befestigungsvorrichtung entlang der Tragsäule ermöglichenden Lösestellung verstellbar sind.

In einer Ausführungsform des bekannten Beschlags umfassen die Klemmmittel zwei relativ zueinander bewegliche Klemmbacken, die zum Ansetzen des Klemmstücks an die Tragsäule in der Lösestellung eine Einführöffnung definieren, deren Querschnitt größer ist als der Querschnitt der Tragsäule. Insbesondere ist dabei der eine Klemmbacken starr an dem Klemmstück angeordnet und der andere Klemmbacken hierzu relativ beweglich, wobei der andere Klemmbacken mittels Schwenkmitteln um eine parallel zu der Tragsäule verlaufende Schwenkachse schwenkbar an dem Klemmstück gelagert ist.

In einer zweiten Ausführungsform des bekannten Beschlags weist der andere Klemmbacken zwei jeweils eine Führungsschräge aufweisende Backenglieder auf, die in Axialrichtung zu der Tragsäule mittels Stellmitteln relativ zueinander beweglich an dem Klemmstück gelagert sind, wobei bei einer Bewegung der Klemmelemente aufeinander zu eine Verlagerung der Klemmflächen nach innen erfolgt. Die Stellmittel umfassen eine die Backenglieder durchsetzende Stellschraube.

In der praktischen Verwendung des bekannten Beschlags stellt sich heraus, dass das sichere Festklemmen des Klemmstücks bei der ersten Ausführungsform mit dem um die Backenschwenkachse verschwenkbaren anderen Klemmbacken schwierig ist, insbesondere ist die Dauerhaftigkeit des Festklemmens, wie sie bei einem Eckschrank erforderlich ist, kaum sicherzustellen.

Bei der zweiten Ausführungsform ist es hingegen so, dass sich die Backenglieder beim Festklemmen des Klemmstücks auf der Tragsäule zwischen dem Klemmstück und der Tragsäule verkeilen, so dass ein nachfolgendes Lösen der Befestigungsvorrichtung, um sie auf einer anderen Höhe an der Tragsäule anzuordnen, was notwendigerweise ein Lösen dieser Verkeilungen erfordert, schwierig ist. Zudem ist zwar das freie Positionieren eines Beschlags auf unterschiedlicher Höhe an einer Tragsäule grundsätzlich erstrebenswert. Das Festlegen des Beschlags auf einer vorgegebenen Höhe erweist sich dabei jedoch in der Praxis als schwierig, weil dazu das gesamte Gewicht des Beschlags so lange anderweitig abgestützt werden muss, bis die Klemmmittel aus ihrer Lösestellung in ihre Klemmstellung gebracht sind.

Aus der EP 2 965 656 A1 ist eine Anbringvorrichtung für ein Tragelement an einer Tragsäule mit Arretiermitteln bekannt, mit denen sich das Tragelement an der aufragenden Tragsäule festsetzen lässt. Die Anbringvorrichtung weist einen Grundkörper auf, an dem zwei getrennte Aufnahmeabschnitte von einem Verbindungsabschnitt seitlich abstehend vorhanden sind. In jedem Aufnahmeabschnitt ist eine Aufnahmeöffnung für die Tragsäule ausgestanzt. Die Arretiermittel umfassen einen Klemmkörper und an einem Grundkörper ausgebildete Abstützvorrichtung. Der Klemmkörper ist mit der Abstützeinrichtung derart an die durch beide Aufnahmeöffnungen gesteckte Tragsäule andrückbar, dass die Tragsäule an der Einbringvorrichtung zwischen den Aufnahmeabschnitten und dem Klemmkörper eingespannt und reibkraftschlüssig festgesetzt ist. Der Klemmkörper ist zylindrisch und um eine quer zu der Tragsäule verlaufende sowie parallel, aber exzentrisch zu seiner Zylinderachse verlaufenden Drehachse drehbar an dem Grundkörper gelagert. Dabei ist der Klemmkörper mit einem Stellhebel drehfest verbunden, um ihn um seine Drehachse zu verdrehen. Um ein selbständiges Lösen des Klemmkörpers aus seiner klemmenden Stellung zu erschweren, ist ein federbelasteter Druckbolzen vorgesehen, der gegen den Klemmkörper drückt. Auch in der praktischen Benutzung dieser bekannten Anbringvorrichtung erweist es sich als schwierig, diese auf einer gewünschten Höhe an der Tragsäule einerseits sicher festzusetzen und andererseits bei Bedarf wieder lösen zu können.

### AUFGABE DER ERFINDUNG

Der Erfindung liegt die Aufgabe zugrunde, eine Klemmvorrichtung zum Festlegen in verschiedenen Längspositionen an einem gestreckt ausgebildeten Träger und einer Anordnung einer Klemmvorrichtung auf einem solchen Träger aufzuzeigen, die einerseits ein sicheres Festlegen der Klemmvorrichtung an dem Träger auf praktisch einfache Weise ermöglichen, aber andererseits auch ein Lösen der Klemmvorrichtung von dem Träger zulassen, um diesem eine andere Längsposition zu überführen.

### LÖSUNG

Die Aufgabe der Erfindung wird durch eine Klemmvorrichtung mit den Merkmalen des unabhängigen Patentanspruchs 1 gelöst. Die abhängigen Patentansprüche 2 bis 13 sind auf bevorzugte Ausführungsformen der Klemmvorrichtung gerichtet, die abhängigen Patentansprüche 14 und 15 auf eine Anordnung der erfindungsgemäßen Klemmvorrichtung auf einem gestreckt ausgebildeten Träger.

### BESCHREIBUNG DER ERFINDUNG

Eine erfindungsgemäße Klemmvorrichtung ist zum Festlegen in verschiedenen Längspositionen an einem gestreckt ausgebildeten Träger vorgesehen. Sie weist einen Lagersockel auf, der eine in Richtung einer Hauptachse durchlaufende Ausnehmung zur Aufnahme des Trägers aufweist und der die Ausnehmung in Umfangsrichtung um die Hauptachse über mindestens 200° umfasst, so dass der in die Ausnehmung eingeführte Träger in seitlicher Richtung in dem Lagersockel gefangen ist. An dem Lagersockel sind zwei Klemmelemente abgestützt, die von einer Spannschraubenanordnung parallel zu der Hauptachse und mit einer Primärkraft gegeneinander beaufschlagt werden. Die Primärkraft wird in quer zu der Hauptachse verlaufende Sekundärkräfte umgelenkt, mit denen die Klemmelemente in die Ausnehmung hinein beaufschlagt werden. Erfindungsgemäß sind dabei die beiden Klemmelemente in zwei Schwenklagern auf einander in Richtung der Hauptachse gegenüberliegenden Seiten des Lagerblocks abgestützt. Diese Schwenklager ermöglichen ein Verschwenken der Klemmelemente gegenüber dem Lagersockel um quer zu der Hauptachse verlaufende Schwenkachsen. Das heißt jedes der Schwenklager definiert eine der Schwenkachsen. Die Spannschraubenanordnung greift in radialer Richtung zu der Hauptachse betrachtet zwischen der jeweiligen Schwenkachse und der Ausnehmung des Lagersockels an dem jeweiligen Klemmelement an. Dabei ist ein Abstand der beiden Schwenkachsen kleiner als ein Abstand der beiden Bereiche, in denen die Klemmelemente in die Ausnehmung hinein beaufschlagt werden. Das heißt, die Klemmelemente gelangen beim Festlegen der Klemmvorrichtung an dem Träger nicht in den Bereich des kleinsten Abstands der Schwenkachsen zu der Ausnehmung. Auf diese Weise wird ein Verkeilen der Klemmelemente zwischen den Schwenklagern und dem Träger vermieden. Trotzdem wird die erfindungsgemäße Klemmvorrichtung in einfacher Weise sicher an dem Träger festgelegt. Indem die Spannschraubenanordnung betätigt wird, beaufschlagt sie beide Klemmelemente an den beiden axialen Enden des Lagersockels gegen den in der Ausnehmung angeordneten Träger. Der Träger wird also an zwei Punkten mit den Klemmelementen geklemmt. Dafür reicht die Betätigung der einen Spannschraubenanordnung aus.

Vorzugsweise greift die Spannschraubenanordnung in radialer Richtung zu der Hauptachse betrachtet in einem Abstand zu der jeweiligen Schwenkachse an dem jeweiligen Klemmelement an, der 30 bis 90 %, vorzugsweise 50 bis 75 % des Abstands der Schwenkachse von der Ausnehmung beträgt. Je näher der Angriffspunkt an die Ausnehmung heranrückt, um so günstiger sind die Hebelverhältnisse zum Aufbringen einer hohen Klemmkraft durch Betätigen der Spannschraubenanordnung. Wenn die Spannschraubenanordnung jedoch zu nahe an die Ausnehmung heranrückt, nimmt ihre Zugänglichkeit ab.

Die Klemmelemente und die Schwenklager können spiegelsymmetrisch zu einer orthogonal zu der Hauptachse verlaufenden Symmetrieebene sowie optional spiegelsymmetrisch zu einer orthogonal zu den Schwenkachsen in Richtung der Hauptachse verlaufenden weiteren Symmetrieebene ausgebildet und angeordnet sein. Bezüglich der ersten Symmetrieebene ist die symmetrische Anordnung natürlich nur bei einander entsprechenden Schwenkstellungen der Klemmelemente gegeben. Wenn beide Symmetrien vorhanden sind, sind beide Klemmelemente identisch ausgebildet, was im Sinne einer hohen Gleichteiligkeit von Vorteil ist. Die Symmetrie zu der ersten Symmetrieebene sorgt auch für gleiche Klemmverhältnisse im Bereich beider Klemmelemente.

Die Klemmelemente können jeweils eine Klemmfläche zur Anlage an dem Träger, ein Durchgangsloch für ein Zugelement der Spannschraubenanordnung und einen Lochrand um das Durchgangsloch zur Abstützung eines Spannelements der Spannschraubenanordnung aufweisen. Die mit der Spannschraubenanordnung aufgebrachte Klemmkraft liegt dort an den Klemmelementen an, wo das Spannelement in radialer Richtung zu der Hauptachse betrachtet zwischen der jeweiligen Schwenkachse und der Ausnehmung an dem Lochrand anliegt. Das Zugelement und das Spannelement der Spannschraubenanordnung, die jedem Klemmelement zugeordnet sind, können durch eine Spannschraube ausgebildet sein. Für die Spannschraubenanordnung kann ein Durchgangsloch durch den Lagersockel vorgesehen sein, dass mit den Durchgangslöchern der Klemmelemente fluchtet. In diesem Durchgangsloch kann eine Gewindebuchse angeordnet sein, in die die beiden Spannschrauben eingreifen. Bei dieser Ausbildung der Spannschraubenanordnung reicht es aus, eine der beiden Spannschrauben weiter in die Gewindehülse einzuschrauben, um beide Klemmelemente zu beaufschlagen. Die Gewindebuchse kann parallel zu der Hauptachse beweglich aber drehfest gegenüber dem Lagersockel angeordnet sein. Das heißt das Durchgangsloch durch den Lagersockel ist zwar in radialer Richtung zu der Hauptachse betrachtet übermaßig, damit sich die Spannschraubenanordnung beim Verschwenken der Klemmelemente gegenüber dem Lagersockel bewegen kann. Die Gewindebuchse ist aber gegenüber Verdrehen in dem Durchgangsloch gesichert. Dazu kann das Durchgangsloch parallel zu dem Abstand der Schwenkachsen von der Ausnehmung durch Seitenwände begrenzt sein und die Gewindebuchse kann einen vier- oder sechskantigen Querschnitt aufweisen, der sich mit zwei parallelen Umfangsflächen an den Seitenwänden abstützt.

Die Klemmvorrichtung kann an ihren der Ausnehmung über ihre Schwenkachsen hinweg gegenüberliegenden Enden Betätigungshebel aufweisen, die so angeordnet sind, dass ein einhändiges Zusammendrücken der Betätigungshebel die Klemmelemente von der Ausnehmung entfernt. Damit ist ein freies Verschieben der Vorrichtung längs einem in der Ausnehmung angeordneten Träger möglich. Bei vertikaler Ausrichtung des Trägers verschwenkt zumindest eines der Klemmelemente durch Einwirkung der Schwerkraft ohne Betätigung der Betätigungshebel bis gegen den Träger.

Die Ausnehmung des Lagersockels kann um die Hauptachse herum ringförmig geschlossen sein. Dies ist vorteilhaft, um hohe Klemmkräfte, die von den Klemmelementen auf den in der Ausnehmung angeordneten Träger ausgeübt werden, abzustützen. Grundsätzlich kann die Ausnehmung um die Hauptachse herum jedoch auch teilweise offen sein.

Jedes der Klemmelemente kann mindestens ein gegenüber seiner restlichen Klemmfläche vorspringenden Vorsprung aufweisen. Dieser Vorsprung kann einerseits dazu genutzt werden, eine hohe punktuelle Flächenpressung zwischen dem Klemmelement und dem in der Ausnehmung angeordneten Träger hervorzurufen. Andererseits kann das Klemmelement mit dem Vorsprung in ein Loch in dem Träger eingreifen, um den Lagersockel schon vor dem Betätigen der Klemmschraubenanordnung in einer durch dieses Loch vorgegebenen Relativposition vorzusichern.

Vorzugsweise weist die Ausnehmung mindestens eine Ecke auf, die in radialer Richtung zwischen der Hauptachse und den Schwenkachsen angeordnet ist, wobei die Klemmelemente auf beiden Seiten der mindestens einen Ecke in die Ausnehmung hinein beaufschlagt werden. Anders gesagt wird der in die Ausnehmung eingeführte Träger über eine seiner Ecken hinweg geklemmt. Dabei kann diese Ecke insbesondere rechtwinklig sein. Bevorzugt ist es zudem, wenn jedes Klemmelement auf beiden Seiten der Ecke jeweils einen Vorsprung aufweist.

Wenn der in die Ausnehmung eingeführte Träger auf seinem Außenumfang auf einer Seite der mindestens einen Ecke Löcher für den Eingriff der Vorsprünge beider Klemmelemente aufweist, wobei die Löcher in einem Abstand längs der Hauptachse angeordnet sind, der einem Bruchteil des Abstands der Vorsprünge längs der Hauptachse entspricht, und wobei die Löcher die Vorsprünge mit Spiel längs der Hauptachse aufnehmen, dienen die in die Löcher eingreifenden Vorsprünge der Klemmelemente auf der einen Seite der Ecke zum Vorsichern der Klemmvorrichtung an dem Träger und Halten die Klemmvorrichtung auch bei vertikaler Ausrichtung des Trägers. Die Vorsprünge auf der anderen Seite der Ecke sorgen hingegen dafür, dass die Klemmkraft nicht nur auf die Ecke des Trägers selbst, sondern auch auf die auf dieser Seite der Ecke angrenzende Umfangsfläche des Trägers wirkt und zwar punktuell zwischen dem jeweiligen Vorsprung und der Umfangsfläche.

Insbesondere ist die erfindungsgemäße Klemmvorrichtung nutzbar, um ein Tablar horizontal beweglich an einer vertikal ausgerichteten Tragsäule abzustützen, beispielsweise in einem Kücheneckschrank, wobei das Tablar horizontal beweglich an dem Lagersockel gelagert ist und der Lagersockel an der den Träger bildenden Tragsäule festgeklemmt ist. Die symmetrische Ausbildung der Klemmvorrichtung ermöglicht dabei eine Rechts-Links-Verwendbarkeit des Beschlags.

Vorteilhafte Weiterbildungen der Erfindung ergeben sich aus den abhängigen Patentansprüchen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch andere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine Ansicht auf eine erfindungsgemäße Klemmvorrichtung mit Blickrichtung längs einer Hauptachse.
- **Fig. 2**: ist ein Schnitt durch die Klemmvorrichtung gemäß Fig. 1 längs der Hauptachse entlang einer in Fig. 1 eingezeichneten Schnittlinie B-B.
- **Fig. 3**: ist eine Explosionszeichnung der erfindungsgemäßen Klemmvorrichtung gemäß den Fig. 1 und 2.
- **Fig. 4**: ist eine perspektivische Ansicht einer Anordnung der erfindungsgemäßen Klemmvorrichtung auf einem längs ihrer Hauptachse vertikal ausgerichteten Träger, wobei an einem Lagersockel der Klemmvorrichtung ein Tragarm um eine zu der Längsachse parallele Schwenkachse verschwenkbar gelagert ist; und
- **Fig. 5**: ist eine perspektivische Ansicht einer Anordnung, die gegenüber der Anordnung von Fig. 4 um ein an dem Tragarm verschwenkbar gelagertes Tablar und durch ein oben teleskopierbar in den vertikalen Träger eingeschobenes Endstück ergänzt ist.

### FIGURENBESCHREIBUNG

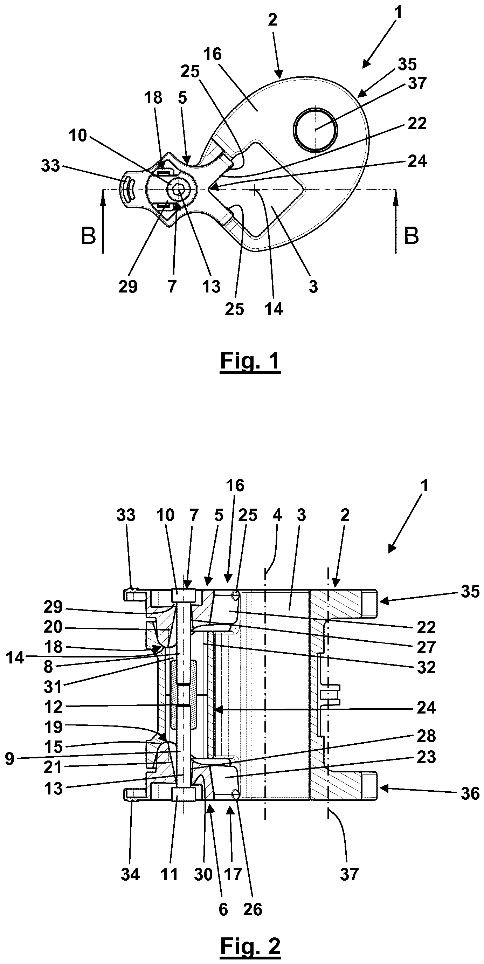

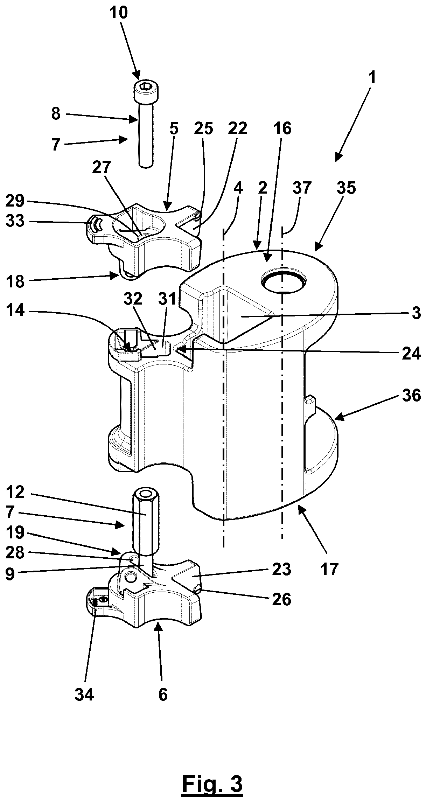

Die in den **Fig. 1 bis 3** in verschiedenen Ansichten dargestellte Klemmvorrichtung 1 weist einen Lagersockel 2 auf. Der Lagersockel 2 weist seinerseits eine Ausnehmung 3 auf. Die Ausnehmung 3 erstreckt sich längs einer Hauptachse 4 durch den Lagersockel 2 hindurch. Dabei bleibt ein freier Querschnitt der Ausnehmung 3 gleich, der hier von im Wesentlichen quadratischen Abmessungen mit abgerundeten Ecken ist. Die Ausnehmung 3 dient zur Aufnahme eines sich längs der Hauptachse 4 erstreckenden, in den Fig. 1 bis 3 nicht dargestellten Trägers. Die Klemmvorrichtung 1 ist zum Festlegen in verschiedenen Längspositionen längs der Hauptachse 4 an diesem Träger vorgesehen. Die Ausnehmung 3 ist mit ihrem freien Querschnitt auf den Querschnitt des Trägers abgestimmt. Der Lagersockel 2 umfasst oder umschließt die Ausnehmung 3 über mindestens 200° um die Hauptachse 4. Bei der Ausführungsform der Klemmvorrichtung 1 gemäß den Fig. 1 bis 3 umfasst der Lagersockel 2 die Ausnehmung 3 über 360° um die Hauptachse 4, d. h. vollständig.

Zu ihrem Festlegen an dem Träger weist die Klemmvorrichtung 1 zwei an dem Lagersockel 2 abgestützte und hier identisch ausgebildete Klemmelemente 5 und 6 sowie eine Spannschraubenanordnung 7 auf. Die Spannschraubenanordnung 7 umfasst zwei Spannschrauben 8 und 9 mit überstehenden Spannschraubenköpfen 10 und 11 sowie eine Gewindebuchse 12, in die beide Spannschrauben 8 und 9 eingreifen. Die Bestandteile 8, 9 und 12 der Spannschraubenanordnung 7 sind koaxial zu einer Spannachse 13 angeordnet. Die Spannachse 13 verläuft längs, d. h. im Wesentlichen parallel zu der Hauptachse 4. Mit der Spannschraubenanordnung 7 werden die Klemmelemente 5 und 6 in Richtung der Spannachse 13 mit einer Primärkraft gegeneinander beaufschlagt. Diese Primärkraft wird in quer zu der Hauptachse 4 verlaufende Sekundärkräfte umgelenkt, mit denen die Klemmelemente 5 und 6 in die Ausnehmung 3 hinein beaufschlagt werden. Dazu sind die beiden Klemmelemente 5 und 6 in zwei Schwenklagern 14 und 15 an der Oberseite 16 und der Unterseite 17 des Lagersockels 2 abgestützt. Die Schwenklager 14 und 15 sind in einander entgegengesetzte Richtungen offene Lagerschalen, in die die Klemmelemente 5 und 6 mit Gelenkköpfen 18 und 19 eingreifen. Das Schwenklager 14 erlaubt ein Verschwenken des Klemmelements 5 um eine Schwenkachse 20, die quer zu der Hauptachse 4 und auch quer zu der Spannachse 13 sowie zu dem Abstand der Spannachse 13 von der Hauptachse 4 verläuft. Entsprechend ermöglicht das Schwenklager 15 ein Verschwenken des Klemmelements 6 um eine zu der Schwenkachse 20 parallele Schwenkachse 21. Die Spannachse 13 verläuft in radialer Richtung zu der Hauptachse 4 betrachtet zwischen der jeweiligen Schwenkachse 20, 21 und der Ausnehmung 3. Dabei greifen die Schraubenköpfe 10 und 11 - in radialer Richtung zu der Hauptachse 4 betrachtet - in einem Abstand zu der von den beiden Schwenkachsen 20 und 21 aufgespannten Ebene an den Klemmelementen 5 und 6 an, der ungefähr so groß ist wie der Abstand dieses Angriffs von der Ausnehmung 3.

Die in die Ausnehmung 3 hinein beaufschlagten Teile der Klemmelemente 5 und 6 weisen Klemmflächen 22 und 23 auf. Der Abstand dieser Klemmflächen 22 und 23 voneinander ist größer als der Abstand der Schwenkachsen 20 und 21 voneinander, so dass die Klemmflächen 22 und 23 niemals in den Bereich des Abstands der jeweiligen Schwenkachse 20, 21 von der Hauptachse 4 gelangen. Die Klemmflächen 22 und 23 erstrecken sich in Umfangsrichtung um die Hauptachse 4 betrachtet über eine Ecke 24 der Ausnehmung 3 hinweg, und sie weisen auf jeder Seite dieser Ecke einen Vorsprung 25 bzw. 26 auf. Weiterhin ist jedes der Klemmelemente 5 und 6 mit einem Durchgangsloch 27 bzw. 28 für die jeweilige Spannschraube 8 bzw. 9 versehen, wobei der zugehörige Schraubenkopf 10 bzw. 11 an einem Lochrand 29 bzw. 30 um das Durchgangsloch 27 bzw. 28 anliegt. Die Gewindebuchse 12 der Spannschraubenanordnung 7 ist in einem Durchgangsloch 31 durch den Lagersockel 2 angeordnet, mit dem die Durchgangslöcher 27 und 28 fluchten. Das Durchgangsloch 31 wird durch zueinander parallele Seitenwände 32 begrenzt, an denen sich die sechseckig ausgebildete Gewindebuchse 12 so abstützt, dass sie in dem Durchgangsloch 31 nicht um die Spannachse 13 verdrehbar ist. An ihren der Ausnehmung 3 über ihren Schwenkachsen 20 und 21 hinweg gegenüberliegenden Enden weisen die Klemmelemente 5 und 6 Betätigungshebel 33 und 34 auf. Beim Zusammendrücken der beiden Betätigungshebel 33 und 34 werden die Klemmflächen 22 und 23 der Klemmelemente 5 und 6 um die Schwenkachsen 20 und 21 aus der Ausnehmung 3 heraus geschwenkt. Es versteht sich, dass dazu die Spannschraubenanordnung 7 nicht angezogen sein darf bzw. gelöst sein muss. Ohne Zusammendrücken der Betätigungshebel 33 und 34 schwenkt bei vertikaler Ausrichtung der Hauptachse 4 das obere Klemmelement 5 mit seiner Klemmfläche 22 allein durch Schwerkraft in die Ausnehmung 3 hinein und kann sich dort gewollt mit einem oder beiden seiner Vorsprünge 25 in einem entsprechenden Loch des Trägers verhaken, das eine gewünschte Position der Klemmvorrichtung 1 längs des Trägers vorgibt.

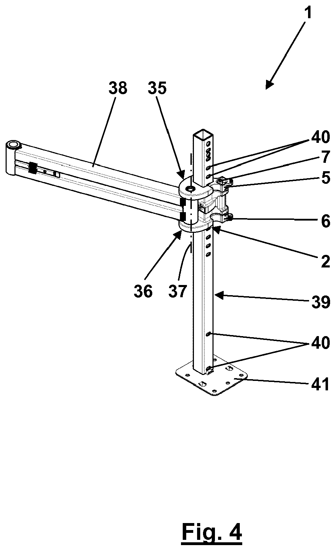

Der Lagersockel 2 weist an einer den Klemmelementen 5 und 6 abgekehrten Seite der Ausnehmung 3 zwei übereinander angeordnete Lagerösen 35 und 36 auf, die eine Schwenkachse 37 definieren. Die Schwenkachse 37 verläuft parallel zu der Hauptachse 4. Um diese Schwenkachse 37 verschwenkbar ist bei der Anordnung gemäß **Fig. 4** ein Tragarm 38 an dem Lagersockel 2 gelagert, während die Klemmvorrichtung 1 in bestimmter Höhe auf einem vertikal ausgerichteten Träger 39 festgelegt ist. Diese Höhe ist durch ein Paar von mehreren Löchern 40 auf einer der beiden Seiten des im Querschnitt quadratischen Trägers 39 vorgesehen, an die sich die Klemmelemente 5 und 6 anlegen. Dabei greift je ein Vorsprung 25, 26 der Klemmelemente 5 und 6 in eines der Löcher 40 dieses Paars ein. Allein durch diesen Eingriff wird eine Abstützung der Klemmvorrichtung 1 an dem vertikal ausgerichteten Träger 39 erreicht, die dann durch Anziehen der Spannschraubenanordnung 7 fixiert wird. Am unteren Ende des Trägers 39 ist eine horizontal ausgerichtete Befestigungsplatte 41 zur Lagerung des Trägers 39 beispielsweise durch Anschrauben an den Boden eines Eckschranks vorgesehen. Über der Befestigungsplatte 41 zeigt Fig. 4 ein freies Paar von unteren Löchern 40 in dem Träger 39 und darüber mehrere obere Löcher 40. Das Paar der unteren Löcher 40 bezeichnet die tiefste sinnvolle Position der Klemmvorrichtung 1 gegenüber dem Träger 39. Die oberen Löcher 40 stehen für verschiedene sinnvolle Positionen einer weiteren Klemmvorrichtung 1 oberhalb der Klemmvorrichtung 1 in der tiefsten sinnvollen Position.

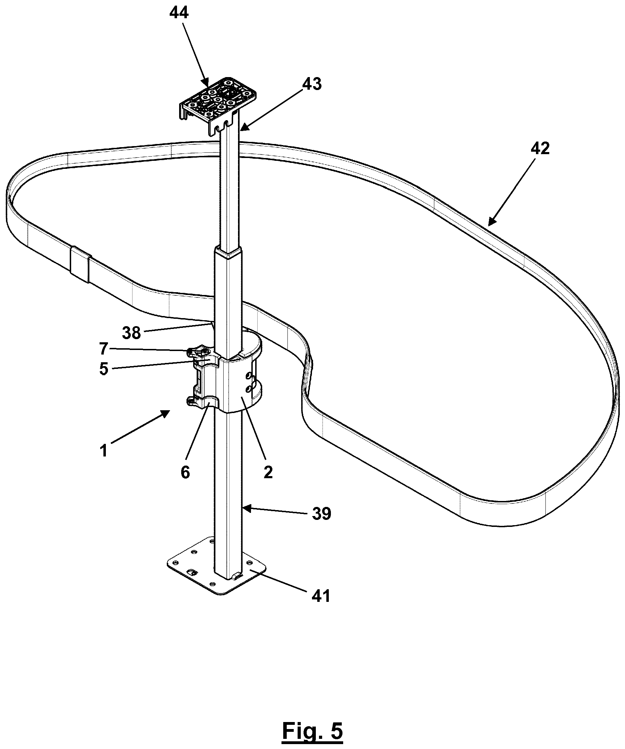

**Fig. 5** zeigt in einer Fig. 4 entgegengesetzten perspektivischen Blickrichtung, dass die zweite Seite des Trägers 39, an der die Klemmelemente 5 und 6 der Klemmvorrichtung 1 ebenfalls angreifen, keine Löcher 40 aufweist. Weiterhin ist hier zu sehen, dass an dem Tragarm 38 ein Tablar 42 gelagert ist und dass in das obere Ende des Trägers 39 ein Endstück 43 teleskopierbar eingeschoben ist, das mit einer zweiten horizontal ausgerichteten Befestigungsplatte 44 endet. Durch das Teleskopieren des Endstücks 43 in dem Träger 39 ist der Abstand der Befestigungsplatten 41 und 44 einstellbar. Dabei kann ein eingestellter Abstand durch Festlegen des Endstücks 43 an dem Träger 39 durch hier nicht sichtbare Klemmmittel fixiert werden.

### BEZUGSZEICHENLISTE

- 1: Klemmvorrichtung
- 2: Lagersockel
- 3: Ausnehmung
- 4: Hauptachse
- 5: Klemmelement
- 6: Klemmelement
- 7: Spannschraubenanordnung
- 8: Spannschraube
- 9: Spannschraube
- 10: Schraubenkopf
- 11: Schraubenkopf
- 12: Gewindebuchse
- 13: Spannachse
- 14: Schwenklager
- 15: Schwenklager
- 16: Oberseite
- 17: Unterseite
- 18: Gelenkkopf
- 19: Gelenkkopf
- 20: Schwenkachse
- 21: Schwenkachse
- 22: Klemmfläche
- 23: Klemmfläche
- 24: Ecke
- 25: Vorsprung
- 26: Vorsprung
- 27: Durchgangsloch
- 28: Durchgangsloch
- 29: Lochrand
- 30: Schraubenrand
- 31: Durchgangsloch
- 32: Seitenwand
- 33: Betätigungshebel
- 34: Betätigungshebel
- 35: Lageröse
- 36: Lageröse
- 37: Schwenkachse
- 38: Tragarm
- 39: Träger
- 40: Loch
- 41: Befestigungsplatte
- 42: Tablar
- 43: Endstück
- 44: Befestigungsplatte

## Patentansprüche

1. Klemmvorrichtung (1) zum Festlegen in verschiedenen Längspositionen an einem gestreckt ausgebildeten Träger (39) mit
- einem Lagersockel (2), der eine in Richtung einer Hauptachse (4) durchlaufende Ausnehmung (3) zur Aufnahme des Trägers (39) aufweist und der die Ausnehmung (3) in Umfangsrichtung um die Hauptachse (4) über mindestens 200° umfasst,
- zwei an dem Lagersockel (2) abgestützten Klemmelementen (5, 6) und
- einer Spannschraubenanordnung (7), die die Klemmelemente (5, 6) parallel zu der Hauptachse (4) mit einer Primärkraft gegeneinander beaufschlagt,
- wobei die Primärkraft in quer zu der Hauptachse (4) verlaufende Sekundärkräfte umgelenkt wird, mit denen die Klemmelemente (5, 6) in die Ausnehmung (3) hinein beaufschlagt werden,
**dadurch gekennzeichnet,**
- **dass** die beiden Klemmelemente (5, 6) in zwei Schwenklagern (14, 15) auf einander in Richtung der Hauptachse (4) gegenüberliegenden Seiten des Lagersockels (2) abgestützt sind,
- wobei die Schwenklager (14, 15) ein Verschwenken der Klemmelemente (5, 6) gegenüber dem Lagersockel (2) um quer zu der Hauptachse (4) verlaufende Schwenkachsen (20, 21) ermöglichen,
- wobei die Spannschraubenanordnung (7) in radialer Richtung zu der Hauptachse (4) betrachtet zwischen der jeweiligen Schwenkachse (20, 21) und der Ausnehmung (3) an dem jeweiligen Klemmelement (5, 6) angreift und
- wobei ein Abstand der beiden Schwenkachsen (20, 21) kleiner ist als ein Abstand der beiden Bereiche, in denen die Klemmelemente (5, 6) in die Ausnehmung (3) hinein beaufschlagt werden.

2. Klemmvorrichtung (1) nach Anspruch 1, **dadurch gekennzeichnet, dass** die Spannschraubenanordnung (7) in radialer Richtung zu der Hauptachse (4) betrachtet in einem Abstand zu der jeweiligen Schwenkachse (20, 21) an dem jeweiligen Klemmelement (5, 6) angreift, der 30 bis 90 % oder 50 bis 75 % des Abstands der Schwenkachsen (20, 21) von der Ausnehmung (3) beträgt.

3. Klemmvorrichtung (1) nach Anspruch 1 oder 2, **dadurch gekennzeichnet, dass** die Klemmelemente (5, 6) und die Schwenklager (14, 15) spiegelsymmetrisch zu einer orthogonal zu der Hauptachse (4) verlaufenden Symmetrieebene sowie optional spiegelsymmetrisch zu einer orthogonal zu den Schwenkachsen (20, 21) in Richtung der Hauptachse (4) verlaufenden weiteren Symmetrieebene ausgebildet und angeordnet sind.

4. Klemmvorrichtung (1) nach einem der vorhergehenden Ansprüche, **dadurch gekennzeichnet, dass** die Klemmelemente (5, 6) jeweils eine Klemmfläche (22, 23) zur Anlage an dem Träger (39), ein Durchgangsloch (31) für ein Zugelement der Spannschraubenanordnung (7) und einen Lochrand (29) um das Durchgangsloch (31) zur Abstützung eines Spannelements der Spannschraubenanordnung (7) aufweist, wobei die Durchgangslöcher (27, 28) der Klemmelemente (5, 6) mit einem Durchgangsloch (31) durch den Lagersockel (2) fluchten.

5. Klemmvorrichtung (1) nach einem der vorhergehenden Ansprüche, **dadurch gekennzeichnet, dass** die Spannschraubenanordnung (7) zwei Spannschrauben (8, 9) mit überstehenden Schraubenköpfen (10, 11) und eine Gewindebuchse (12) umfasst, in die beide Spannschrauben (8, 9) eingreifen.

6. Klemmvorrichtung (1) nach Anspruch 5, **dadurch gekennzeichnet, dass** die Gewindebuchse (12) parallel zu der Hauptachse (4) beweglich aber drehfest gegenüber dem Lagersockel (2) angeordnet ist.

7. Klemmvorrichtung (1) nach Anspruch 6, soweit rückbezogen auf Anspruch 4, **dadurch gekennzeichnet, dass** das Durchgangsloch (31) parallel zu dem Abstand der Schwenkachsen (20, 21) von der Ausnehmung (3) durch Seitenwände (32) begrenzt ist und dass die Gewindebuchse (12) einen vier- oder sechskantigen Querschnitt aufweist und der sich mit zwei parallelen Umfangsflächen an den Seitenwänden (32) abstützt.

8. Klemmvorrichtung (1) nach einem der vorhergehenden Ansprüche, **dadurch gekennzeichnet, dass** die Klemmelemente (5, 6) an ihren der Ausnehmung (3) über ihre Schwenkachsen (20, 21) hinweg gegenüberliegenden Enden Betätigungshebel (33, 34) aufweisen, wobei ein einhändiges Zusammendrücken der Betätigungshebel (33, 34) die Klemmelemente (5, 6) von der Ausnehmung (3) entfernt.

9. Klemmvorrichtung (1) nach einem der vorhergehenden Ansprüche, **dadurch gekennzeichnet, dass** die Ausnehmung (3) um die Hauptachse (4) herum ringförmig geschlossen ist.

10. Klemmvorrichtung (1) nach einem der vorhergehenden Ansprüche, **dadurch gekennzeichnet, dass** jedes Klemmelement (5, 6) mindestens einen gegenüber seiner restlichen Klemmfläche (22, 23) vorspringen Vorsprung (25, 26) aufweist.

11. Klemmvorrichtung (1) nach einem der vorhergehenden Ansprüche, **dadurch gekennzeichnet, dass** die Ausnehmung (3) mindestens eine Ecke (24) aufweist, die in radialer Richtung zwischen der Hauptachse (4) und den Schwenkachsen (20, 21) angeordnet ist, wobei die Klemmelemente (5, 6) auf beiden Seiten der mindestens einen Ecke (24) in die Ausnehmung (3) hinein beaufschlagt werden.

12. Klemmvorrichtung (1) nach Anspruch 11, **dadurch gekennzeichnet, dass** die Ecke (24) rechtwinklig ist.

13. Klemmvorrichtung (1) nach Anspruch 11 oder 12, soweit rückbezogen auf Anspruch 10, **dadurch gekennzeichnet, dass** jedes Klemmelement (5, 6) auf beiden Seiten der Ecke (24) jeweils einen Vorsprung (25, 26) aufweist.

14. Anordnung einer Klemmvorrichtung (1) nach Anspruch 13 auf einem längs der Hauptsachse (4) gestreckt ausgebildeten und die Ausnehmung (3) ausfüllenden Träger (39), **dadurch gekennzeichnet, dass** der Träger (39) in seinem Außenumfang auf einer Seite der mindestens einen Ecke (24) Löcher (40) für den Eingriff der Vorsprünge (25, 26) beider Klemmelemente (5, 6) aufweist, wobei die Löcher (40) in einem Abstand längs der Hauptachse (4) angeordnet sind, der einem Bruchteil des Abstands der Vorsprünge (25, 26) längs der Hauptachse (4) entspricht und wobei die Löcher (40) die Vorsprünge (25, 26) mit Spiel längs der Hauptachse (4) aufnehmen.

15. Anordnung nach Anspruch 14, **dadurch gekennzeichnet, dass** der Träger (39) eine vertikal ausgerichtete Tragsäule ist und dass an dem Lagersockel (2) ein Tablar (42) horizontal beweglich gelagert ist.

## Claims

1. Clamping device (1) for fixation in different longitudinal positions at an elongated support (39), the clamping device (1) comprising
- a bearing pedestal (2) which has a clearance (3) for receiving the support (39), the clearance (3) being continuous in direction of a main axis (4), and which encloses the clearance (3) in circumferential direction about the main axis (4) over at least 200°,
- two clamping elements (5, 6) supported at the bearing pedestal (2) and
- a tensioning screw arrangement (7) which, by a primary force, forces the clamping elements (5, 6) against each other in parallel to the main axis (4),
- wherein in the primary force is diverted into a secondary force running transverse to the main axis (4), by which the clamping elements (5, 6) are forced into the clearance (3),
**characterised in**
- **that** the two clamping elements (5, 6) are supported in two swivel bearings (14, 15) on two sides of the bearing pedestal (2) facing each other in the direction of the main axis (4),
- wherein the swivel bearings (14, 15) allow for swivelling the clamping elements (5, 6) with regard to the bearing pedestal (2) about swivel axes (20) running transverse to the main axis (4),
- wherein the tensioning screw arrangement (7), when viewed in radial direction with regard to the main axis (4), engages the respective clamping element (5, 6) between the respective swivel axis (20, 21) and the clearance (3), and
- wherein a distance between the two swivel axes (20, 21) is smaller than a distance of the two areas in which the clamping elements (5, 6) are forced into the clearance (3).

2. Clamping device (1) of claim 1, **characterised in that** the tensioning screw arrangement (7), when viewed in radial direction with regard to the main axis (4), engages the respective clamping element (5, 6) at a distance to the respective swivel axis (20, 21), which is 30 to 90 % or 50 to 75 % of the distance of the swivel axes (20, 21) to the clearance (3).

3. Clamping device (1) of claim 1 or 2, **characterised in that** the clamping elements (5, 6) and the swivel bearings (14, 15) are designed and arranged mirror-symmetrically with regard to a symmetry plane running orthogonally to the main axis (4) and, optionally, mirror-symmetrically with regard to a further symmetry plane running orthogonally to the swivel axes (20, 21) in direction of the main axis (4).

4. Clamping device (1) of any of the preceding claims, **characterised in that** the clamping elements (5, 6) each have a clamping surface (22, 23) for abutting against the support (39), a through hole (31) for a pulling element of the tensioning screw arrangement (7), and a hole rim (29) around the through hole (31) for supporting a tensioning element of the tensioning screw arrangement (7), wherein the through holes (27, 28) of the clamping elements (5, 6) are aligned with a through hole (31) through the bearing pedestal (2).

5. Clamping device (1) of any of the preceding claims, **characterised in that** the tensioning screw arrangement (7) has two tensioning screws (8, 9) with projecting screw heads (10, 11), and a threaded bushing (12) into which the two tensioning screws (8, 9) engage.

6. Clamping device (1) of claim 5, **characterised in that** the threaded bushing (12) is arranged such that it is movable along the main axis (4) but rotationally fixed with regard to the bearing pedestal (2).

7. Clamping device (1) of claim 6, in so far as depending on claim 4, **characterised in that** the through hole (31) is delimited by side walls (32) parallel to the distance of the swivel axes (20, 21) to the clearance (3), and that the threaded bushing (12) has a tetragonal or hexagonal cross section which is supported at the side walls (32) via two peripheral faces.

8. Clamping device (1) of any of the preceding claims, **characterised in that** the clamping elements (5, 6) have operating levers (33, 34) at their ends facing away from the clearance (3) across their swivel axes (20, 21), wherein a compression of the operation levers (33, 34) with one hand moves the clamping elements (5, 6) away from the clearance (3).

9. Clamping device (1) of any of the preceding claims, **characterised in that** the clearance (3) is closed around the main axis (4) like a ring.

10. Clamping device (1) of any of the preceding claims, **characterised in that** each clamping element (5, 6) has at least one projection (25, 26) projecting beyond a remainder of its clamping surface (22, 23).

11. Clamping device (1) of any of the preceding claims, **characterised in that** the clearance (3) has at least one corner (24) which is arranged between the main axis (4) and the swivel axes (20, 21) in radial direction, wherein the clamping elements (5, 6) are forced into the clearance (3) on both sides of the at least one corner (24).

12. Clamping device (1) of claim 11, **characterised in that** the corner (24) is rectangular.

13. Clamping device (1) of claim 11 or 12, and so far as depending on claim 10, **characterised in that** each clamping element (5, 6) has a projection (25, 26) each on both sides of the corner (24).

14. Arrangement of a clamping device (1) according to claim 13 on a support (36) elongated along the main axis (4) and filling out the clearance (3), **characterised in that** the support (39) has holes (40) for engagement of the projections (25, 26) of both clamping elements (5, 6) in its outer circumference on one side of the at least one corner (24), wherein the holes (40) are arranged at a distance along the main axis (4) which corresponds to a fraction of the distance of the projections (25, 26) along the main axis (4), and wherein the holes (40) receive the projections (25, 26) with play along the main axis (4).

15. Arrangement of claim 14, **characterised in that** the support (39) is a vertically oriented support column, and that a shelve (42) is supported at the bearing pedestals (2) in a horizontally movable way.

## Revendications

1. Dispositif de serrage (1) pour la fixation dans différentes positions longitudinales à un support allongé (39), avec
- un socle de palier (2), qui comprend un évidement (3) traversant en direction d'un axe principal (4), pour le logement du support (39) et qui entoure l'évidement (3) dans la direction circonférentielle autour de l'axe principale (4) sur au moins 200°,
- deux éléments de serrage (5, 6) appuyés contre le socle de palier (2) et
- un dispositif à vis de serrage (7) qui sollicite les éléments de serrage (5, 6) l'un contre l'autre parallèlement à l'axe principal (4) avec une force primaire,
- la force primaire étant déviée dans des forces secondaires s'étendant transversalement par rapport à l'axe principale (4), avec lesquelles les éléments de serrage (5, 6) sont déplacés vers l'évidement (3),
**caractérisé en ce que**
- les deux éléments de serrage (5, 6) sont appuyés, dans deux paliers pivotants (14, 15), sur des côtés opposées entre eux du socle de palier (2) en direction de l'axe principal (4),
- les paliers pivotants (14, 15) permettant un pivotement des éléments de serrage (5, 6) par rapport au socle de palier (2) autour d'axes de pivotement (20, 21) s'étendant transversalement par rapport à l'axe principal (4),
- le dispositif à vis de serrage (7), vu dans la direction radiale par rapport à l'axe principal (4), agissant entre l'axe de pivotement (20, 21) respectif et l'évidement (3) sur l'élément de serrage (5, 6) respectif et
- une distance entre les deux axes de pivotement (20, 21) étant inférieure à une distance entre les deux parties dans lesquelles les éléments de serrage (5, 6) sont déplacés vers l'évidement (3).

2. Dispositif de serrage (1) selon la revendication 1, **caractérisé en ce que** le dispositif à vis de serrage (7), vu dans la direction radiale par rapport à l'axe principal (4), sur l'élément de serrage (5, 6) respectif, à une distance par rapport à l'axe de pivotement (20, 21) respectif qui représente de 30 à 90 % ou de 50 à 75 % de la distance entre les axes de pivotement (20, 21) et l'évidement (3).

3. Dispositif de serrage (1) selon la revendication 1 ou 2, **caractérisé en ce que** les éléments de serrage (5, 6) et les paliers pivotants (14, 15) sont réalisés et disposés avec une symétrie en miroir par rapport à un plan de symétrie s'étendant de manière orthogonale à l'axe principal (4) ainsi qu'avec une symétrie en miroir par rapport à un autre plan de symétrie s'étendant de manière orthogonale aux axes de pivotement (20, 21) en direction de l'axe principal (4).

4. Dispositif de serrage (1) selon l'une des revendications précédentes, **caractérisé en ce que** les éléments de serrage (5, 6) comprennent chacun une surface de serrage (22, 23) pour un appui contre le support (39), un trou traversant (31) pour un élément de traction du dispositif à vis de serrage (7) et un bord de trou (29) autour du trou traversant (31) pour l'appui d'un élément de serrage du dispositif à vis de serrage (7), les trous traversants (27, 28) des éléments de serrage (5, 6) étant alignés avec un trou traversant (31) à travers le socle de palier (2).

5. Dispositif de serrage (1) selon l'une des revendications précédentes, **caractérisé en ce que** le dispositif à vis de serrage (7) comprend deux vis de serrage (8, 9) avec des têtes de vis (10, 11) en saillie et une douille filetée (12), dans laquelle les deux vis de serrage (8, 9) s'engagent.

6. Dispositif de serrage (1) selon la revendication 5, **caractérisé en ce que** la douille filetée (12) est disposée de manière mobile parallèlement à l'axe principal (4) mais solidaire en rotation par rapport au socle de palier (2).

7. Dispositif de serrage (1) selon la revendication 6, en référence à la revendication 4, **caractérisé en ce que** le trou traversant est limité, parallèlement à la distance entre les axes de pivotement (20, 21) et l'évidement (3), par des parois latérales (32) et **en ce que** la douille filetée (12) présente une section transversale carrée ou hexagonale, qui s'appuie, avec deux surfaces circonférentielles parallèles, contre les parois latérales (32).

8. Dispositif de serrage (1) selon l'une des revendications précédentes, **caractérisé en ce que** les éléments de serrage (5, 6) comprennent, au niveau de leurs extrémités opposées à l'évidement (3), sur leurs axes de pivotement (20, 21), des leviers d'actionnement (33, 34), une compression d'une seule main des leviers d'actionnement (33, 34) éloignant les éléments de serrage (5, 6) de l'évidement (3).

9. Dispositif de serrage (1) selon l'une des revendications précédentes, **caractérisé en ce que** l'évidement (3) est fermé de manière annulaire autour de l'axe principal (4).

10. Dispositif de serrage (1) selon l'une des revendications précédentes, **caractérisé en ce que** chaque élément de serrage (5, 6) comprend au moins une saillie (25, 26) dépassant du reste de sa surface de serrage (22, 23).

11. Dispositif de serrage (1) selon l'une des revendications précédentes, **caractérisé en ce que** l'évidement (3) comprend au moins un angle (24) qui est disposé dans la direction radiale entre l'axe principal (4) et les axes de pivotement (20, 21), les éléments de serrage (5, 6) étant déplacés sur les deux côtés de l'au moins un angle (24) vers l'évidement (3).

12. Dispositif de serrage (1) selon la revendication 11, **caractérisé en ce que** l'angle (24) est un angle droit.

13. Dispositif de serrage (1) selon la revendication 11 ou 12, en référence à la revendication 10, **caractérisé en ce que** chaque élément de serrage (5, 6) comprend, sur les deux côtés de l'angle (24), une saillie (25, 26).

14. Disposition d'un dispositif de serrage (1) selon la revendication 13 sur un support (39) réalisé de manière allongée le long de l'axe principal (4) et remplissant l'évidement (3), **caractérisée en ce que** le support (39) comprend, sur sa circonférence externe, sur un côté de l'au moins un angle (24), des trous (40) pour l'emboîtement des saillies (25, 26) des deux éléments de serrage (5, 6), les trous (40) étant disposés à une distance le long de l'axe principal (4), qui correspond à une fraction de la distance entre les saillies (25, 26) le long de l'axe principal (4) et les trous (40) logeant les saillies (25, 26) avec un jeu le long de l'axe principal (4).

15. Disposition selon la revendication 14, **caractérisée en ce que** le support (39) est une colonne porteuse orientée verticalement et **en ce qu'**une tablette (42) est logée de manière mobile horizontalement au niveau du socle de palier (2).
